# FASCICULE DE BREVET EUROPEEN

(11) **EP 2 852 796 B1**
(45) Date de publication et mention de la délivrance du brevet: **28.09.2016**
(21) Numéro de dépôt: 13728435.2
(22) Date de dépôt: 17.05.2013
(51) Int. Cl.: F24J 2/04

(54) **TOITURE EN TUILE D'APPARENCE ORDINAIRE COMPORTANT UN DISPOSITIF DE RÉCUPÉRATION THERMIQUE DU RAYONNEMENT SOLAIRE INVISIBLE DE L'EXTÉRIEUR**
UNAUFFÄLLIGES ZIEGELDACH MIT EINER VON AUSSEN UNSICHTBAREN SONNENWÄRMERÜCKGEWINNUNGSVORRICHTUNG
INCONSPICUOUS TILED ROOF COMPRISING A SOLAR RADIATION HEAT RECOVERY DEVICE INVISIBLE FROM THE OUTSIDE

(30) Priorité: 22.05.2012 FR 1201440
(43) Date de publication de la demande: 01.04.2015
(73) Titulaire: Marçais, Frédéric, 94240 l'Haÿ-les-Roses (FR)
(72) Inventeur: Marçais, Frédéric, 94240 l'Haÿ-les-Roses (FR)
(74) Mandataire: Lucas, Laurent Jacques
(86) Numéro de dépôt international: PCT/FR2013/000129
(87) Numéro de publication internationale: WO 2013/175081

(56) Documents cités:
- DE-U1-202007 008 709
- FR-A1- 2 935 172
- FR-A1- 2 966 228

## Description

La présente invention concerne une toiture en tuiles, d'apparence ordinaire, comportant un dispositif de récupération thermique du rayonnement solaire invisible de l'extérieur.

Une série de modules de couverture de conception nouvelle absorbe le rayonnement solaire et restitue la chaleur emmagasinée vers un réseau caloporteur spécifique positionné sur un support dédié, fixé sur la charpente.

La récupération thermique du rayonnement solaire est habituellement effectuée par des panneaux solaires thermiques qui convertissent le rayonnement solaire en chaleur.

Ces panneaux sont constitués d'un châssis présentant un capteur plat ou tubulaire destiné au réchauffage d'un fluide caloporteur.

Ils présentent des inconvénients.

En effet, ces panneaux nécessitent l'utilisation de matériaux métalliques et la réalisation d'un châssis lourd et onéreux à produire.

Ils alourdissent la toiture, occasionnent des reprises d'étanchéité sur la couverture dont la réalisation délicate peut provoquer des fuites.
De plus, ces systèmes de panneaux solaires présentent une esthétique contestable sur les toitures.

Dans de nombreux cas, la réglementation d'urbanisme rend leur pose impossible. En particulier à proximité des bâtiments inscrits au titre des monuments historiques.

Des systèmes de récupération plus discrets ont été créés afin de répondre aux nécessités esthétiques des bâtiments.

Certains comportent des dispositifs de récupération situés en sous-face de toiture qui utilisent des éléments métalliques en liaison avec un réseau caloporteur.

Les éléments de couverture se comportent alors comme un parement extérieur dont l'esthétique est préservée

L'inconvénient majeur est la création d'une pièce ajoutée pour réaliser la liaison entre la couverture et le réseau caloporteur, ce qui augmente la complexité de la pose et crée un matériel supplémentaire augmentant le prix et l'impact environnemental Le bilan en énergie grise est fortement alourdi.
Des systèmes de récupération en matériaux synthétiques ont également été créés et reprennent l'esthétique des matériaux traditionnels. Ces systèmes utilisent des matériaux synthétiques comme absorbeurs et présentent des inconvénients concernant la durée de vie des panneaux, le recyclage des produits, et l'utilisation de produits dérivés de l'industrie chimique ou pétrolière pour leur réalisation.

D'autres systèmes utilisent de l'air comme caloporteur.

Celui-ci monte naturellement sous les toits du fait de l'échauffement. Les éléments de couverture transmettent leur chaleur vers l'air.

Ce système présente d'autres inconvénients : il est difficile d'exploiter cette chaleur. En effet, pour utiliser cet air chaud et distribuer cette chaleur vers l'utilisateur, il est nécessaire d'utiliser un système de circulation d'air volumineux et onéreux ou d'ajouter des échangeurs thermiques air/eau, pour son utilisation comme fluide primaire. Par exemple pour la préparation d'eau chaude sanitaire.

Le système proposé par l'invention permet de remédier à ces différents inconvénients.

La couverture et les éléments qui la constituent transmettent directement la chaleur vers un réseau dans lequel circule un fluide caloporteur.

Il n'y a pas d'interface entre eux et les modules de couverture qui constituent l'apparence de la toiture et le réseau.

La toiture conserve une apparence traditionnelle sans qu'il soit possible de déceler l'usage d'un récupérateur thermique.

L'état de la technique montre qu'il existe une solution compatible avec ces considérations techniques.

Il s'agit de mon brevet numéro 2 935 172 FR : Système de modules de récupération thermique qui permet de transmettre la chaleur vers un réseau caloporteur.

Ce système présente des inconvénients, en particulier concernant la qualité du contact entre le réseau et les modules.

Et surtout, l'utilisation de picots qui assurent le contact entre les modules et le réseau n'est pas réalisable par moulage et rend leur mise en place, réalisée à la barbotine, avant cuisson, difficile et onéreuse.

Mon brevet de perfectionnement a été publié sous le numéro FR 2 966 228 pour permettre d'assurer un meilleur contact entre la tuile et son réseau caloporteur.

Ce système remédie en grande partie aux inconvénients d'un mauvais contact entre le module et le réseau caloporteur et permet en outre d'utiliser les tuiles canal.

Néanmoins, il subsiste encore des inconvénients.

Si la pose de modules individuels avec ce système est efficace, le recouvrement latéral des tuiles empêche parfois un bon engagement sur leur support.
Cette difficulté est particulièrement présente sur les tuiles mécaniques à emboîtement. Il résulte de cet enfoncement imparfait un interstice entre le bourrelet du module et le réseau préjudiciable à une bonne transmission thermique.

D'autre part, l'accrochage par une zone spécifique avec le support nécessite une modification onéreuse pour modifier le bourrelet sous sur les tuiles.

Si l'on se contente d'un simple ancrage de la tuile sur son support, des décrochages se produisent du fait des contraintes mécaniques provoquées principalement par les intempéries et la dilatation. En effet, le réseau exerce une pression favorisant l'extraction des tuiles de leur support.

Dans ce cas, l'enfoncement du module sur son support ne s'effectue plus correctement et laisse un vide d'air entre le tube et le bourrelet situé sous le module.

En dépit d'une forte proximité, la conduction thermique n'est plus réalisée de manière efficace du fait de cet interstice empli d'air.

Or, la récupération thermique permet de meilleurs rendements s'il existe un contact étroit entre la tuile et son réseau.

La toiture selon l'invention a pour but la réalisation de la captation thermique du rayonnement solaire en remédiant à ces inconvénients.

Elle consiste en la réalisation d'une toiture d'apparence traditionnelle en mettant en place une récupération thermique invisible de l'extérieur.
Cette invention permet de résoudre différentes difficultés rencontrées lors de l'utilisation des techniques précédentes. Elle permet également d'augmenter la surface d'échange entre les modules et le réseau caloporteur.

Les modules de conception nouvelle qui reçoivent le rayonnement solaire comportent un bourrelet mâle destiné à s'insérer dans le réseau caloporteur.

Le réseau caloporteur présente une lumière destinée à recevoir le bourrelet du module de récupération thermique.
En effet, le réseau présente une gorge longitudinale de forme identique à la partie saillante du bourrelet des modules de récupération thermique.
Cette gorge est continue sur l'ensemble du réseau destiné à la captation thermique. Le réseau se situe en sous face de l'ensemble des modules de récupération thermique.
Il y a un réseau caloporteur par toiture, ce qui évite les jonctions et raccords inutiles dans des parties difficiles d'accès.
Il est néanmoins possible d'utiliser plusieurs réseaux pour dissocier des pans de toitures, augmenter et réduire la surface utile de captation, etc.
On considéra alors qu'il y a plusieurs toitures de récupération thermique.
À titre d'exemple non limitatif, on peut dissocier les toitures orientées à l'est et à l'ouest.
C'est à l'intérieur de cette cavité ou gorge longitudinale présente dans le réseau, qu'est réalisé l'échange thermique avec les modules de toiture.
C'est la raison de l'expression « dans le réseau » caloporteur, en opposition à la captation périphérique réalisée habituellement sur le réseau caloporteur, qualifié « d'extérieur ».

La gorge longitudinale se situe dans la veine liquide du réseau.
Le réseau caloporteur n'est pas perforé et cette gorge longitudinale reste bien isolée du fluide caloporteur par son enveloppe.
Contrairement aux réseaux tubulaires habituels dont l'échange thermique avec le bourrelet du module de récupération se fait par l'extérieur, le réseau présente une lumière qui permet l'insertion en son sein du bourrelet de récupération thermique.

L'ouverture longitudinale femelle ou gorge longitudinale située dans le réseau caloporteur reprend la forme mâle ou saillante du bourrelet situé sous le module de récupération thermique.

La dimension de cette ouverture longitudinale ou réceptrice peut-être équivalente ou approchante pour permettre au bourrelet du module de s'insérer correctement dans le réseau caloporteur qui présente des caractéristiques élastiques.

Le réseau est flexible, ce qui permet le resserrement de la gorge autour de la partie saillante mâle du bourrelet et la fixation des modules sur le support.

Selon une variante de l'invention, un échange complémentaire peut être effectué par l'extérieur du réseau pour améliorer la transmission thermique et le rendement de récupération.
Dans ce cas particulièrement avantageux, l'échange thermique s'effectue à la fois par l'intermédiaire de la gorge qualifiée de partie interne du réseau et par le périmètre extérieur du tube qualifié de partie extérieure
Selon cette variante, le bourrelet du module de récupération thermique comporte une surface latérale de contact et d'appuis destinés à améliorer l'échange thermique entre les modules et le réseau et à faciliter la répartition de la pression d'appui lors de l'enfoncement des modules.
À la différence des systèmes existants, le contact entre le module de toiture et le réseau est assuré même en cas d'enfoncement imparfait du module sur le réseau. Cela grâce à la partie mâle saillante du bourrelet des modules en contact dans la gorge du réseau.
Le support par la contrainte qu'il exerce sur le réseau permet en effet le resserrement de la gorge sur le bourrelet des modules et le contact d'au moins une partie inférieure du bourrelet mâle.

Une surface significative du module reste en contact avec le réseau dans le cas d'un enfoncement partiel des tuiles.
La chaleur reçue par le module est donc transmise au réseau dans de bonnes conditions grâce à ce contact.

Le support exerce une pression latérale sur la partie extérieure tubulaire du réseau. Le réseau agit comme une pince sur le bourrelet du module du fait de la contrainte mécanique latérale exercée par le support.

Le réseau doit présenter des caractéristiques flexibles pour permettre de maintenir en contact étroit et en son sein, le bourrelet situé sous les tuiles.

Le réseau caloporteur est réalisé dans un matériau quelconque qui présente des caractéristiques de flexibilité propres à permettre la modification de sa géométrie par les contraintes extérieures.
Cette caractéristique est nécessaire également pour l'installation du réseau sur la toiture.

Le support est destiné à la fixation du réseau et des modules sur la charpente ; il comporte une zone de mise en contraintes du réseau par l'intermédiaire de pans de serrages situés sur les bras de maintien.
Le minimum d'un support est nécessaire pour la réalisation de la toiture selon l'invention.
Ce support est constitué par un socle, positionné sur la charpente et fixé à celle-ci par l'intermédiaire de fixations ordinaires comme des clous, des rivets, des vis, etc.
En effet, le support comporte au moins un emplacement dans le socle destiné au passage de fixations ordinaires vers la charpente.

Le socle constitue la partie du support mitoyenne avec la charpente.

Dans le prolongement du socle se situent des bras.
Ces bras sont destinés au maintien du réseau caloporteur.
Les bras constituent une partie du support et sont situés en opposition mutuelle. Selon un mode particulier de réalisation, les bras du support peuvent être ajourés présentant en vue de profil une apparence de créneaux, cette variante n'a pas été représentée.

Selon un autre mode particulier de réalisation, le ou les supports sont intégrés dans une sous toiture. Cette caractéristique permet de réaliser la préfabrication en atelier des éléments de la couverture.

Dans ce dernier mode de réalisation, la sous toiture peut être fabriquée dans une tôle métallique propre à améliorer les caractéristiques de protection aux intempéries. Cette caractéristique sera particulièrement appréciée dans les régions montagneuses pour protéger la charpente de la neige et des infiltrations.

Les bras peuvent être soit immobiles ou fixes, soit flexibles et permettre une articulation notamment au moment de l'insertion du réseau caloporteur dans le support.

Dans le cas de bras fixe, l'écrasement élastique du réseau caloporteur permet son insertion et son positionnement final dans le support.

Un pan de glissement situé sur la partie haute du bras permet l'insertion du tube sans détérioration jusqu'à sa position finale au sein du support.

Selon une variante intéressante de l'innovation, au moins un des bras du support comporte une zone de flexion destinée à faciliter l'insertion du réseau par son écartement latéral au moment de son installation par le couvreur.

La dimension adaptée du bras permet sa flexion et son écartement lors de l'insertion du réseau.

Ainsi, selon cette variante, le bras du support est articulé et permet son écartement au moment du passage du réseau.

Selon un mode particulier de réalisation, il n'est pas nécessaire que tous les bras soient articulés.

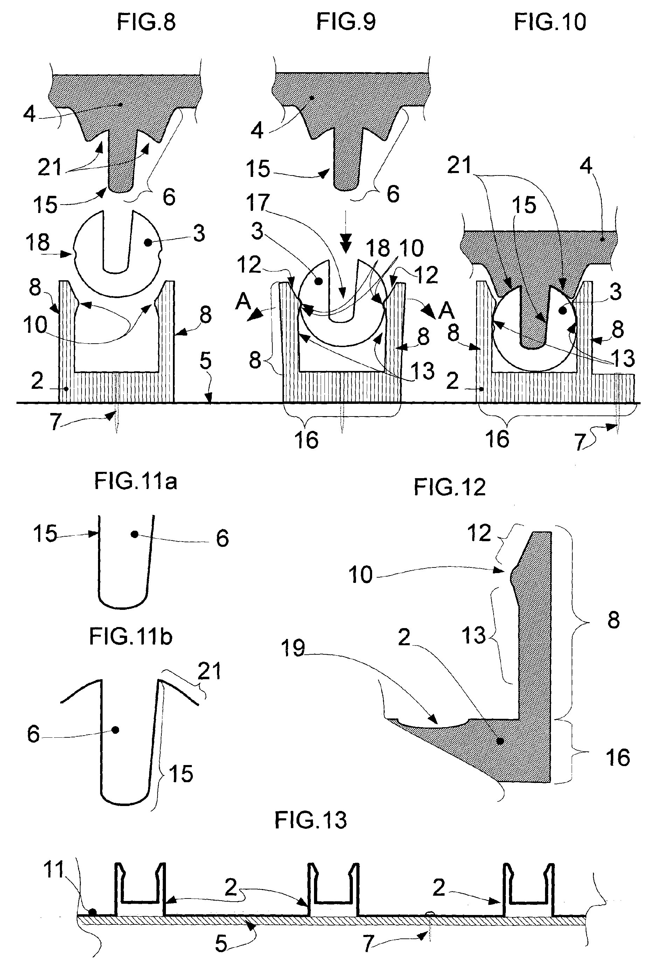

Pour illustrer ce mode particulier de réalisation, les figures 8 à 10 présentent deux bras en opposition flexibles, un seul côté flexible suffit pour améliorer grandement l'insertion du réseau caloporteur.

Dans ce dernier cas, un bras fixe fait opposition au bras flexible.

Cette caractéristique intéressante permet de simplifier la mise en oeuvre du réseau et de limiter son écrasement lors de sa mise en place.

Une zone de moindre épaisseur située en partie inférieure des bras peut faciliter leurs flexions.

Dans tous les cas, le support comporte des bras en opposition mutuelle, chacun intégrant deux pans.

Ces deux pans différents sont situés sur les bras pour assurer les fonctions nécessaires à la réalisation de la toiture :
- Un pan de glissement qui permet le passage du réseau à l'intérieur du support.
- Un pan de serrage qui constitue une zone de mise en contraintes du réseau caloporteur et permet de maintenir solidement le réseau au sein du support.

Ledit serrage par cette mise en contraintes du réseau caloporteur, assure la fixation des modules de toiture et le bon contact entre le bourrelet et le réseau.

Lesdits pans de glissement et de serrage peuvent être situés sur un même plan.
Le pan de glissement est situé sur la partie supérieure du bras, tandis que le pan de serrage est situé sur la partie inférieure.
Le pan de glissement correspond à la surface laissant passer le réseau par glissement vers sa destination finale ou installée.
Le pan de serrage correspond à la surface en contact avec le réseau installé ou en position finale.

Selon des modes particuliers de réalisation, les pans de serrage et de glissements ne seront pas situés sur un même plan, mais sur deux plans sécants.
Ainsi pour illustrer un mode particulier de réalisation, les pans de glissement plus larges sur la partie haute des bras iront en rétrécissant vers la partie basse des bras du support. Caractéristique avantageuse qui permet de faciliter l'installation du réseau.
En dessous, les pans de serrage maintiennent le réseau en position finale et évitent son retrait par friction ;
le réseau est maintenu en position dans le support, de même que la tuile à l'intérieur de la gorge du réseau caloporteur.
La gorge du réseau se referme sur le bourrelet bloquant le module et maintenant l'ensemble dans le support fixé sur la charpente par l'intermédiaire de fixations ordinaires.
En effet, le réseau caloporteur fixe la tuile par le resserrement de l'espace récepteur du bourrelet.
L'écartement des pans de serrage situé sur les bras en opposition mutuelle du support est d'une largeur inférieure à celle du réseau caloporteur.
On parle de largeur du réseau, constatant que celui-ci n'est pas strictement tubulaire à cet endroit. En effet, la pression exercée par les pans de serrage en modifie la forme même imperceptiblement par un léger écrasement.
Le réseau caloporteur est maintenu dans le support par la friction des pans de serrage.

Lorsque le réseau est enfoncé par l'installateur, la pression latérale exercée par les pans de serrage du support situés en opposition transmet une pression sur le réseau. Ladite pression resserre la gorge en application sur le bourrelet mâle situé sous les modules de toiture.
Le réseau se referme à la manière d'une pince sur le bourrelet.
La contrainte exercée par le support sur le réseau maintient le module de toiture grâce à la friction exercée sur le bourrelet de récupération thermique.

Le réseau ainsi refermé autour du bourrelet des modules de toiture est maintenu prisonnier par les bras du support.
Selon un mode particulièrement avantageux de réalisation, l'espace entre les pans de serrages au contact du tube sera plus large que ceux des pans de glissement. Cette caractéristique permet au bras du support de reprendre un état proche de la position de repos, après flexion et de mieux s'opposer au retrait du réseau.

Ainsi, le support permet d'assurer les fonctions de fixation des modules de toiture, et du réseau sur la charpente.
Le réseau caloporteur élastique réalise une interface entre le module de toiture et le support.
La gorge du réseau forme une pince.
Cette pince est actionnée par la pression latérale exercée sur le réseau grâce à la transmission périmétrique des forces. Les bras du support exercent cette force d'appui sur le réseau.
La gorge du réseau se referme sur le bourrelet bloquant le module et maintenant l'ensemble dans le support fixé sur la charpente.
L'ensemble constitué par le support, le réseau et le module de récupération est maintenu solidairement une fois installé.
Cette caractéristique est également particulièrement avantageuse pour éviter le décrochage des tuiles exposées au vent.

La récupération thermique du rayonnement solaire étant effectuée en sous-face des modules, la couverture réalisée présente l'aspect d'une toiture ordinaire dont il est impossible de distinguer les caractéristiques de récupération thermique.

Ces modules de toiture prennent en effet l'apparence des tuiles ordinaires.

Concernant l'ensemble du document, le terme de tuiles peut d'ailleurs se substituer au terme de « module de toiture »

Le terme de module de toiture est surtout préféré hors du contexte de l'invention en ce qu'il permet d'insister sur la fonction de récupération thermique du rayonnement solaire des tuiles.

Dans ce document, le mot tuile doit être compris comme incluant cette fonction de récupération thermique en plus de son sens habituel d'éléments de couverture.

Les termes « modules de toiture », tuile, « module de récupération thermique », module ou tuiles thermiques sont employés indifféremment.

Ainsi, la toiture selon l'invention nécessite au moins un module de récupération thermique du rayonnement solaire.

À titre d'exemple non limitatif le nombre de tuiles utilisées pour réaliser la toiture sera important et dépassera facilement la centaine.

Les modules de récupération thermique comportent en sous-face au moins une excroissance également appelée bourrelet caractérisé par une partie saillante mâle destinée à s'emboîter dans le réseau caloporteur.
La qualification de parties saillantes s'apprécie en regard de la partie réceptrice femelle du réseau caloporteur.

Contrairement aux bourrelets habituels, les bourrelets situés sous les modules de toiture ne sont pas ouverts en leur sein et ne permettent pas le passage d'un réseau tubulaire du marché.

Un des avantages de l'invention est de pouvoir utiliser des modules de toiture fabriqués dans des matériaux rigides, indéformables et peu coûteux.
De plus, ces modules peuvent être produits par moulage.

Selon des modes particuliers de réalisation :
- Ces tuiles sont moulées à partir d'argile, matériau traditionnel couramment dénommé après cuisson terre cuite.
- De nombreux matériaux sont utilisables pour réaliser les tuiles.
   À titre d'exemple non exhaustif on peut citer le verre, le béton, les matières plastiques...
- Chaque module de toiture peut comporter un ou plusieurs bourrelets en sous-face.

La position du bourrelet est déterminée en fonction de chaque modèle de tuiles et des performances de récupération thermique souhaitée.

À titre d'exemple, il peut y avoir un bourrelet en partie haute de la tuile qui assure également la fonction de tenue habituellement dévolue aux tenons des tuiles et un deuxième bourrelet sous le pureau apparent, qui est la partie de la tuile exposée au rayonnement solaire.

Selon un mode particulier de réalisation, avec l'utilisation des tuiles canal et de certaines tuiles régionales, le bourrelet peut être situé sur un plan parallèle à la ligne de pente en sous-face de la tuile ;
ce bourrelet situé dans la ligne de pente sera avantageusement situé sous la tuile de couvert qui reçoit directement le rayonnement thermique solaire.

Selon un mode particulier de réalisation, le réseau caloporteur peut se présenter sous forme d'un conduit en matériau synthétique semi-flexible de type polyéthylène réticulé « PER ».

Le fluide caloporteur présent dans le réseau mis en circulation permet de répondre à toutes les utilisations habituelles des productions solaires thermiques.

À titre d'exemple, ce fluide pourra être utilisé pour la production d'eau chaude sanitaire par un chauffe-eau solaire individuel « CESI » ou par la réalisation d'un système solaire combiné avec un plancher chauffant. «SSC » ou encore d'alimenter une pompe à chaleur « PAC » comme source froide...

Selon un mode particulier de réalisation de l'invention, particulièrement avantageux, un profil saillant situé sur les bras du support maintient le réseau en attente avant la pose des modules de toiture.

Cela permet de réaliser la pose du réseau en attente, avant l'installation des modules. Et cela sans outillage particulier par simple emboîtement sur le support.

En effet, les profils situés sur les bras permettent de coupler temporairement le réseau avec le support.

Dans ce mode particulier de réalisation, le réseau présente au moins deux rainures latérales qui s'emboîtent avec les profils situés sur les bras. Ainsi le réseau est couplé temporairement avec le support lors de l'installation.

Cette caractéristique permet d'orienter l'ouverture longitudinale du réseau et de la maintenir dans une position adéquate pour recevoir le bourrelet mâle du module.

En effet, les deux rainures situées latéralement sur le réseau permettent de bloquer sa rotation.

Ce profil complète les fonctions de base du support :
- Le glissement assuré par les pans de glissement permettant l'installation du réseau caloporteur entre les bras soit par l'écartement du ou des bras du support, soit par la déformation élastique du réseau.
- Le serrage assuré par les pans de serrage qui permet la mise en contrainte du réseau sur le module de toiture ainsi que le maintien de l'ensemble.
- La fixation de l'ensemble de récupération sur la charpente à l'aide de fixations ordinaires traversant le socle.

Selon un autre mode particulier de réalisation de l'invention, la gorge située sur le réseau caloporteur présente une zone rugueuse destinée à augmenter la friction avec le bourrelet mâle des modules de toiture.

À titre d'exemple, cette gorge peut présenter des excroissances de formes et de quantité variées. Ces excroissances sont destinées à améliorer blocage du bourrelet de récupération thermique situé sous le module.

Elles augmentent la friction de la gorge avec le module

Ces excroissances renforcent le maintien du bourrelet situé sous le module pour éviter son arrachage.

Selon des modes particuliers de réalisation non illustrés,
ces excroissances présentent une surface évoquant des écailles de poissons.

Le maintien du bourrelet de la tuile au sein du réseau est réalisé selon un effet de « peau de phoque » sur une surface glacée.

D'autre part pour terminer la toiture, les limites d'ouvrage: rive de toiture, faîtage, noues, égouts, arêtier, lucarnes, etc., peuvent être réalisés de manière traditionnelle ce qui permet le passage du réseau en sous-face et en particulier la réalisation des lyres de dilatation.

Les dessins annexés illustrent l'invention :
La figure 1 représente un pan de toiture et le principe de récupération thermique associé à plusieurs modules.
La figure 2 présente une coupe du dispositif de récupération thermique selon la figure précédente.
La figure 3 présente une coupe du dispositif de récupération thermique situé en tête de tuiles.
La figure 4 présente la coupe du réseau caloporteur.
La figure 5 présente en détail le dispositif de récupération avant montage
La figure 6 présente le dispositif de récupération en phase de montage.
La figure 7 présente le dispositif de récupération en position finale
La figure 8 illustre une variante du dispositif de récupération avant montage.
La figure 9 présente le réseau maintenu dans son support lors du montage.
La figure 10 présente l'ensemble de récupération monté.
Les figures 11a et 11b présentent les sections en contact entre le bourrelet du module et le réseau.
La figure 12 présente une partie du support qui illustre ses différentes parties constitutives
La figure 13 présente la coupe de supports intégrés à une sous toiture métallique.

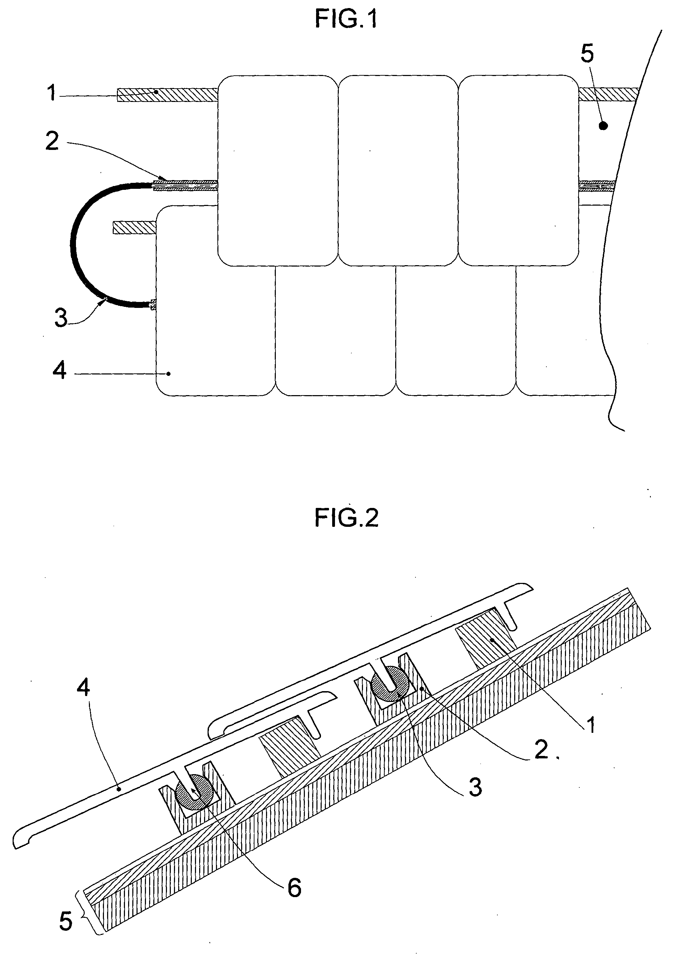

En référence à ces dessins, j'ai représenté en figure 1, un pan de toiture, sur lequel sont disposés les modules de récupération thermique (4) qui présentent une apparence de tuiles plates ordinaires.
Sur ce dessin, l'aspect extérieur de la toiture est identique à celui d'une toiture en tuiles plates du marché. Le pan de toiture étant présenté à la manière d'un écorché laisse apparaître différents éléments constitutifs de l'invention.
Le support (2) est fixé sur la charpente (5) de manière ordinaire par une fixation tel un clou et reçoit le réseau caloporteur (3).
Le module de toiture (4) est positionné sur le tasseau (1) à la manière des tuiles plates ordinaires et le profil situé en sous face invisible sur cette figure, transmet la chaleur du rayonnement solaire vers le réseau caloporteur (3).

La figure 2 présente la coupe du pan de toiture selon la figure 1, et permet de distinguer différents éléments constitutifs de l'invention. Les modules de récupération thermique (4) présentent le bourrelet de récupération thermique mâle (6) qui transmet par conduction la chaleur captée par les modules de récupération thermique (4) à partir du rayonnement solaire vers le réseau caloporteur (3). Une ouverture de ce réseau ou gorge longitudinale, de forme identique à celle du bourrelet du module (6), reste en parfait contact grâce à la contrainte latérale exercée par le support (2).

D'autres éléments classiques de la couverture sont présentés sur cette figure : D'une part, la charpente (5) dont les différents constituants ne sont pas limitatifs et ne constituent pas l'objet de l'invention. D'autre part, le tasseau (1) de fixation en tête de tuile.
La fixation ordinaire (7) qui lie le support à la charpente n'est pas visible sur ce dessin ; elle est représentée sur d'autres figures.

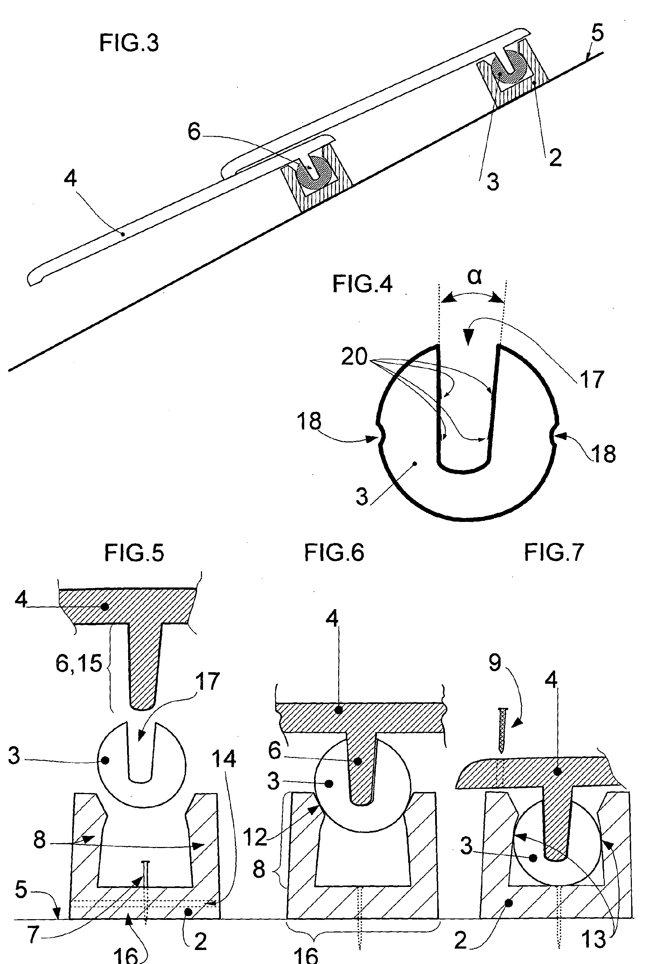

La figure 3 constitue une variante intéressante de l'invention. Le bourrelet (6), élément constituant du module de récupération thermique (4), est situé en partie haute. Ainsi, le support (2) se substitue au tasseau de fixation sur la charpente (5).
Comme pour la figure 2, le réseau caloporteur (3) est maintenu en étroit contact avec le bourrelet du module (6) situé en sous-face grâce à la pression exercée par le support (2).

La figure 4 présente la coupe du réseau et en particulier les caractéristiques intéressantes de l'invention. Le réseau (3) n'est pas un simple conduit tubulaire, mais présente un profil spécifique. En effet, son aspect cylindrique comporte une ouverture (17) de forme identique à la partie mâle du bourrelet (6) situé sous les modules de toiture (4), des autres figures. La dimension peut différer légèrement, en particulier pour faciliter l'insertion du profil mâle en son sein. Le contact est provoqué par la pression extérieure latérale exercée lors du montage de ce réseau à l'intérieur du support (2) (voir figure sept et dix). Le profil femelle (17) se referme alors comme une pince sur le bourrelet du module. Le resserrement correspond à la réduction de l'angle d'ouverture (α) de la gorge du réseau. Cette figure présente également deux rainures latérales (18) destinées au maintien du tube (3) sur le support dans l'attente de l'installation des modules de récupération thermique. Ces rainures (18) permettent d'éviter le pivotement du réseau tubulaire (3) lors de son installation. Le réseau (3) peut être intégralement positionné en attente de la pose des modules de récupération par-dessus. Les rainures (18) s'emboitent avec le profil des bras. À l'intérieur du profil femelle (17) sont présentés des dispositifs (20) permettant un meilleur blocage de la tuile après son enfoncement. Ce système qui ne s'oppose pas à l'enfoncement de la tuile, agit comme un véritable anti retour.

La figure 5 présente l'ensemble des composants de base de l'invention avant montage. Ainsi les modules de récupération thermique (4) prolongés de la partie mâle (15) confondue dans ce cas avec le bourrelet (6) en sous face.
En effet, le bourrelet (6) situé sous le module de toiture (4) est entièrement saillant. On distingue également le réseau caloporteur (3) avec les caractéristiques minimales d'emplacements de réception du bourrelet (17). Le support (2) qui est fixé sur la charpente par l'intermédiaire d'un clou ou d'une vis (7) est constitué de bras (8) positionné de part et d'autre du socle (16).
Dans le socle, sont percés un ou plusieurs orifices de ventilation (14) destinés à répondre aux exigences de renouvellement d'air en sous faces de toitures conformément au DTU (document technique unifié) en vigueur.

Dans la forme de réalisation selon la figure 5, le support (2) peut être constitué de bois dont le profil ne comporte aucune difficulté de réalisation à l'aide de toupie et de l'outillage classique du menuisier;
le réseau (3) peut être réalisé en polyéthylène réticulé à partir d'une forme d'extrusion spécifique à l'innovation.

Selon cette forme particulière de réalisation on pourra utiliser de l'eau glycolée comme fluide caloporteur, couramment utilisée pour éviter le risque de gel en hiver.
Les modules de toiture ou tuiles (4) peuvent être réalisés par moulage à partir des mêmes constituants que les tuiles ordinaires à savoir de l'argile comportant éventuellement des adjuvants destinés à en modifier les caractéristiques.

La figure 6 représente l'installation du module de toiture (4) par enfoncement. Celui-ci fait pression sur le réseau (3) par l'intermédiaire de son bourrelet (6).
Le réseau (3) appuie sur le pan de glissement (12). Le réseau (3) possède caractéristiques élastiques, ce qui permet sa déformation momentanée et son passage au sein des bras (8) situés de part et d'autre du socle (16) du support (2). Les qualités élastiques du réseau (3) suffisent à son insertion en vue du positionnement final malgré la présence de bras fixes (8).
Les bras (8), situés de part et d'autre du support (2) selon une variante, peuvent faciliter l'insertion du tube (3) par leur flexion latérale. Les bras relativement épais sur cette représentation peuvent également être affinés à leurs bases pour permettre ou améliorer leur flexion et le positionnement du tube.
Le bras de levier plus important en haut des bras (8) facilite l'écartement de part et d'autre du réseau (3) et le glissement du réseau peut intervenir pour qu'il prenne sa position finale, comme présenté sur la figure suivante.

La figure 7 reprend avec une variante, les éléments décrits sur la figure précédente. La tuile (4), le réseau (3) et le support (2) sont présentés en position finale. Le support remplace le tasseau situé habituellement en tête de tuiles. Une fixation ordinaire (9) comme un clou immobilise définitivement la tuile (4) qui est déjà maintenue grâce à son bourrelet en raison de la pression latérale exercée par le réseau caloporteur (3). Ce réseau étant lui-même maintenu par les pans de serrage (13) situés entre les bras du support (2). La largeur des pans de serrage de part et d'autre des bras présente un resserrement sur leur partie haute qui maintient le réseau (3) dans le support (2).

La figure 8 présente une autre variante avantageuse de l'invention. Les caractéristiques de base sont reprises et comportent des améliorations pour faciliter la pose et augmenter la surface de contact entre le module de toiture et son réseau. Cette figure présente le premier stade de l'installation sur la toiture.
Le support (2) est fixé sur la charpente (5) grâce à une fixation ordinaire comme un clou (7). Le réseau (3) et la tuile (4) ne sont pas encore posés.

Le bourrelet (6) du module (4) dispose d'une zone de contact supplémentaire (21) en plus de la partie saillante, mâle (15).
Cette zone (21), lors de l'enfoncement du module de récupération thermique (4), se positionne au contact du réseau caloporteur (3) autour de la périphérie tubulaire du réseau et permet d'accroître la surface de contact. Cette caractéristique est particulièrement avantageuse d'une part pour répartir la pression d'appui largement afin d'enfoncer le module (4) sans casse à l'intérieur du support (2) et d'autre part pour augmenter la surface d'échange thermique entre le réseau (3) et la tuile (4). Les deux bras (8) situés de part et d'autre du socle comportent des profils (10).Ces profils permettent, au moment de la pose, le maintien du réseau caloporteur (3) en attente de la réception des modules de toiture (4) comme le montre la figure suivante.

La figure 9 reprend la vue précédente et présente le réseau caloporteur dans sa situation d'attente. Le réseau caloporteur (3) est enfoncé à la main par l'installateur comme indiqué par la double flèche. Ce qui contraint les bras (8) à s'écarter par flexion, dans le sens indiqué par les deux flèches (A). L'élasticité du réseau contribue également à ce positionnement. Le réseau (3) comporte des rainures (18) qui permettent de le maintenir bloqué en position intermédiaire sans en permettre la rotation. Le profil (10) situé sur le bras (8) complète les pans de glissement (12) et de serrage (13). Le profil (10) s'emboîte avec les rainures (18) du réseau caloporteur (3). L'installateur pourra utiliser une cale en bois disposée dans la gorge (non représentée) pour enfoncer le réseau (3) dans sa position d'attente.
La gorge (17) est en attente pour recevoir le profil mâle (15) situé sur le bourrelet (6) du module (4) qui viendra achever la pose comme indiqué figure 10. Le couvreur peut réaliser la pose complète du réseau caloporteur (3) avant l'arrivée des modules de récupération thermique (4) sur le chantier.

La figure 10 présente la coupe de l'ensemble de l'invention montée. Le module de récupération thermique (4) a été enfoncé dans le réseau caloporteur (3). Les deux bras (8) situés de part et d'autre du support se sont resserrés et maintiennent une contrainte latérale de serrage exercé par le pan de serrage (13) sur le réseau caloporteur (3). La conduction thermique est réalisée au sein même du réseau (3) par le périmètre du bourrelet en contact avec le réseau lors de l'enfoncement du module (15). A cette transmission thermique s'ajoute celle réalisée par l'extérieur du réseau par le contact avec le bourrelet de récupération thermique (21).
Le support (2) présente également un socle (16) prolongé à l'extérieur des bras (8).

La fixation ordinaire (7) peut ainsi être placée différemment que sur les deux vues précédentes. Cette caractéristique avantageuse permet entre autres de faciliter l'implantation du support sur la charpente et en particulier, d'éviter d'endommager les bras (9) au moment de l'installation de la fixation par un outil tel un marteau.

La figure 11 présente le profil spécifique du bourrelet de récupération thermique (6) situé sous le module de toiture (4).
Ce bourrelet de récupération thermique comporte une partie mâle (15) destinée à s'insérer dans le réseau caloporteur. Sur la figure 11 b. Ce bourrelet comporte également un périmètre de transmission extérieur (21) en complément de la récupération réalisée au sein du réseau de récupération (15). Ce qui permet d'augmenter la surface de contact entre le module et le réseau, et par conséquent l'échange thermique.

La figure 12 représente la coupe partielle du support dans ce mode de réalisation particulièrement avantageux destiné à recevoir l'ensemble de récupérations thermiques.
Cette coupe permet de détailler différentes fonctions du support.
Le pan de glissement (12) permet lors de l'insertion du réseau d'écarter le bras du support (8).
Le pan de glissement (12) permet également l'écrasement élastique du réseau caloporteur pendant son installation.
Le profil (10) permet de maintenir celui-ci en attente de l'installation des tuiles.
Ce profil (10) est destiné à s'emboîter dans la rainure (18) du réseau caloporteur (3) (voir figure 4).
Enfin lors de l'insertion définitive des tuiles dans leur support, le bras du support (8) fléchit de nouveau pour permettre au réseau caloporteur (3) de se déboîter du profil (10) et de descendre en position finale.
Le pan de serrage (13) effectue la mise en contraintes du réseau caloporteur lors de l'enfoncement du module. Un berceau (19) situé dans le socle (16) du support accueille le réseau et permet d'optimiser les côtes dimensionnelles du support (2). Des matériaux isolants non représentés peuvent également s'insérer sur cet emplacement (19) afin d'assurer une bonne rupture du pont thermique vers la charpente.
Selon une variante, non représentée, le berceau peut être constitué par une pièce rapportée en proéminence sur le socle du support (2).

La figure13 illustre une variante de l'innovation. Les supports (2) sont réalisés à l'aide d'une tôle métallique emboutie. Les supports des modules sont solidaires et forment une sous toiture (11). L'Illustration présente ces supports réalisés à l'aide d'une même tôle métallique emboutie positionnée sur la charpente (5). Une fixation ordinaire (7) vient fixer l'ensemble sur la charpente.

L'invention est particulièrement destinée à la réalisation de toitures esthétiques incluant la récupération thermique du rayonnement solaire.
Elle permet de faciliter sa réalisation et d'augmenter les rendements thermiques.

De plus, cette invention a également vocation de réaliser la récupération thermique du rayonnement solaire au meilleur coût en modérant l'usage de matériaux supplémentaires lors de la réalisation des toitures.

Elle s'inscrit dans une démarche citoyenne de réduction de la consommation des énergies fossiles et de responsabilité à l'égard des ressources naturelles.

## Revendications

1. Toiture en tuile d'apparence ordinaire comportant un dispositif de récupération thermique du rayonnement solaire invisible de l'extérieur, ladite toiture étant composée, d'une part, d'au moins un module de récupération thermique du rayonnement solaire (4) et d'au moins un support (2), d'autre part, d'un réseau caloporteur (3), ledit module de récupération thermique (4), comportant en sous face au moins une excroissance ou bourrelet (6), ledit support (2) destiné à la fixation du réseau (3) et des modules (4) sur la charpente (5), comportant un socle (16) prolongé par des bras (8) situés en opposition mutuelle, comportant au moins un emplacement dans le socle (16) destiné au passage de fixations ordinaires (7) vers la charpente (5) et comportant des bras en opposition mutuelle (8),
ladite toiture étant **caractérisée en ce que** :
- chaque bras (8) intègre deux pans : un pan de glissement (12) qui permet le passage du réseau à l'intérieur du support et un pan de serrage (13) dont par la pression latérale est exercée sur le réseau (3),
- ledit bourrelet (6) comporte une partie saillante mâle (15) destinée à s'emboiter dans le réseau caloporteur (3),
- ledit réseau (3) comporte une gorge longitudinale (17), de forme identique à la partie saillante du bourrelet des modules de récupération thermique (15),
- la flexibilité du réseau (3), permet le resserrement de cette gorge (17) autour de la partie saillante mâle (15), du bourrelet (6) et la fixation des modules (4) sur le support (2),
- lorsque le réseau (3) est enfoncé par l'installateur, la pression latérale exercée par les pans de serrage (13) du support (2) situés en opposition, transmet une pression sur le réseau (3) qui resserre sa gorge (17) en application sur le bourrelet mâle (15) situé sous les modules de toiture (4).

2. Toiture selon la revendication 1 **caractérisée en ce que** le bourrelet du module de récupération thermique (6) comporte une surface latérale de contact et d'appuis (21) destinés à améliorer l'échange thermique entre les modules(4) et le réseau (3) et à faciliter la répartition de la pression d'appui lors de l'enfoncement des modules (4).

3. Toiture selon les revendications 1 ou la revendication 2 **caractérisée en ce qu'**un profil saillant (10) situé sur les bras du support (8) maintient le réseau (3) en attente avant la pose des modules de toiture (4),
caractérisée également par le réseau (3) qui présente au moins deux rainures latérales (18) qui s'emboîtent avec les profils (10) situés sur les bras (8) permettant de coupler temporairement le réseau (3) avec le support (2) lors de l'installation.

4. Toiture selon l'une quelconque des revendications précédentes **caractérisée en ce qu'**au moins un des bras (8) du support (2) comporte une zone de flexion destinée à faciliter l'insertion du réseau par son écartement latéral au moment de son installation par le couvreur.

5. Toiture selon l'une quelconque des revendications précédentes **caractérisée en ce que** la gorge (17) située sur le réseau caloporteur (3) présente une zone rugueuse destinée à augmenter la friction avec le bourrelet mâle (15) des modules de toiture (4).

6. Toiture selon l'une quelconque des revendications précédentes **caractérisée en ce que** le ou les supports (2) sont intégrés dans une sous toiture (11).

## Patentansprüche

1. Ziegeldach mit gewöhnlichem Aussehen, das eine von außen unsichtbare Sonnenstrahlungswärme-Rückgewinnungsvorrichtung umfasst, wobei das Dach einerseits aus wenigstens einem Sonnenstrahlungswärme-Rückgewinnungsmodul (4) und wenigstens einem Träger (2) und andererseits aus einem Wärmeträgernetzwerk (3) zusammengesetzt ist, wobei das Wärmerückgewinnungsmodul (4) an der Unterseite wenigstens einen Auswuchs oder Wulst (6) aufweist, wobei der Träger (2) zum Befestigen des Netzwerks (3) und der Module (4) am Dachstuhl (5) bestimmt ist, umfassend einen durch einander gegenüberliegende Arme (8) verlängerten Sockel (16), umfassend wenigstens eine Stelle in dem Sockel (16) für die Passage von gewöhnlichen Befestigungsmitteln (7) zum Dachstuhl (5) und einander gegenüberliegende Arme (8), wobei das Dach **dadurch gekennzeichnet ist, dass**:
- in jedem Arm (8) zwei Teile integriert sind: ein Gleitteil (12), der die Passage des Netzes ins Innere des Trägers zulässt, und einen Verriegelungsteil (13), durch den lateraler Druck auf das Netz (3) ausgeübt wird,
- der Wulst (6) einen männlichen auskragenden Teil (15) zum Einhausen in dem Wärmeträgernetzwerk (3) umfasst,
- das Netzwerk (3) eine Längsrinne (17) mit einer Form umfasst, die mit dem auskragenden Teil des Wulstes der Wärmerückgewinnungsmodule (15) identisch ist,
- die Flexibilität des Netzwerks (3) das Einklemmen dieser Rinne (17) um den männlichen auskragenden Teil (15) des Wulstes (6) und das Befestigen der Module (4) an dem Träger (2) zulässt,
- wenn das Netzwerk (3) vom Installateur eingedrückt wird, der von den Verriegelungsteilen (13) des gegenüberliegenden Trägers (2) ausgeübte laterale Druck einen Druck auf das Netzwerk (3) überträgt, der seine Rinne (17) in Anlage an den unter den Dachmodulen (4) befindlichen männlichen Wulst (15) einklemmt.

2. Dach nach Anspruch 1, **dadurch gekennzeichnet, dass** der Wulst des Wärmerückgewinnungsmoduls (6) eine seitliche Kontakt- und Anlagefläche (21) zum Verbessern des Wärmeaustauschs zwischen den Modulen (4) und dem Netzwerk (3) und zum Unterstützen der Verteilung des Anlagedrucks beim Eindrücken der Module (4) umfasst.

3. Dach nach Anspruch 1 oder Anspruch 2, **dadurch gekennzeichnet, dass** ein auskragendes Profil (10), das sich an den Armen des Trägers (8) befindet, das Netzwerk (3) in Wartestellung vor dem Montieren der Dachmodule (4) hält,
sowie **dadurch gekennzeichnet, dass** das Netzwerk (3) wenigstens zwei seitliche Rippen (18) umfasst, die mit den Profilen (10) eingehaust werden, die sich an den Armen (8) befinden, die eine vorübergehende Kopplung des Netzwerks (3) mit dem Träger (2) bei der Installation zulassen.

4. Dach nach einem der vorherigen Ansprüche, **dadurch gekennzeichnet, dass** wenigstens einer der Arme (8) des Trägers (2) eine Biegezone umfasst, die zum Unterstützen des Einfügens des Netzwerks durch seinen lateralen Abstand beim Installieren durch den Dachdecker bestimmt ist.

5. Dach nach einem der vorherigen Ansprüche, **dadurch gekennzeichnet, dass** die auf dem Wärmeträgernetzwerk (3) befindliche Rinne (17) eine aufgeraute Zone zum Erhöhen der Reibung zwischen dem menschlichen Wulst (15) der Dachmodule (4) aufweist.

6. Dach nach einem der vorherigen Ansprüche, **dadurch gekennzeichnet, dass** der oder die Träger (2) in ein Unterdach (11) integriert ist/sind.

## Claims

1. A tiled roof of standard appearance comprising a solar radiation heat recovery device that is invisible from the outside, said roof comprising, on the one hand, at least one solar radiation heat recovery module (4) and, on the other hand, at least one support (2) of a heat transfer network (3), said heat recovery module (4) comprising on the underside at least one raised portion or protrusion (6), said support (2) intended for fixing the network (3) and the modules (4) to the roof frame (5), comprising a base (16) extended by arms (8) positioned opposite one another, comprising at least one area in the base (16) intended for the passage of standard fixings (7) towards the roof frame (5) and comprising arms positioned opposite one another (8),
said roof being **characterised in that**:
- each arm (8) incorporates two faces: a sliding face (12) which permits the passage of the network inside the support, and a clamping face (13), the lateral pressure of which is exerted upon the network (3),
- said protrusion (6) comprises a male protruding part (15) intended to be interlocked in the heat transfer network (3),
- said network (3) comprises a longitudinal groove (17) having a shape which is identical to the protruding part of the protrusion of the heat recovery modules (15),
- the flexibility of the network (3) permits the tightening of this groove (17) about the male protruding part (15) of the protrusion (6) and the fixing of the modules (4) to the support (2),
- when the network (3) is pushed in by the installer, the lateral pressure exerted by the clamping faces (13) of the support (2) positioned opposite one another transmits a pressure to the network (3) which tightens the groove (17) thereof when applied to the male protrusion (15) located below the roof modules (4).

2. The roof according to Claim 1, **characterised in that** the protrusion of the heat recovery module (6) comprises a lateral contact surface and bearing surface (21) intended to improve the heat exchange between the modules (4) and the network (3) and to facilitate the distribution of the bearing pressure when the modules (4) are pushed in.

3. The roof according to Claim 1 or Claim 2, **characterised in that** a protruding profile (10) located on the support arms (8) retains the network (3) awaiting the installation of the roof modules (4),
also **characterised by** the network (3) which exhibits at least two lateral grooves (18) which interlock with the profiles (10) located on the arms (8) that enable the network (3) to be coupled temporarily to the support (2) during installation.

4. The roof according to any of the preceding claims, **characterised in that** at least one of the arms (8) of the support (2) comprises a flexion zone intended to facilitate the insertion of the network by being deflected laterally at the time of its installation by the roofer.

5. The roof according to any of the preceding claims, **characterised in that** the groove (17) located on the heat transfer network (3) exhibits a roughened zone intended to increase the friction with the male protrusion (15) of the roof modules (4).

6. The roof according to any of the preceding claims, **characterised in that** the support or supports (2) are integrated into a roof deck (11).
